# EUROPEAN PATENT APPLICATION

(11) **EP 2 341 702 A1**
(43) Date of publication of application: **06.07.2011**
(21) Application number: 09388019.3
(22) Date of filing: 31.12.2009
(51) Int. Cl.: H04M 1/73, H04M 1/60, H04B 1/16, H04W 52/02

(54) **Wireless electronic device with automatic power control**

(71) Applicant: GN Netcom A/S, 2750 Ballerup (DK)
(72) Inventor: Andersen, Michael Hoby, 2200 Copenhagen N (DK)
(74) Representative: Larsen, Hans Ole

(57) **Abstract**

An electronic device (1) adapted for being wirelessly connected to a wireless telecommunication device (6), said telecommunication device (6) comprising a long-range wireless communication interface (7) and a short-range wireless communication interface (8). The electronic device (1) comprising a short-range wireless communications interface (2) for establishing a short-range link (9) with the short-range wireless communication interface (8) of the telecommunication device (6), a power source (3) and a power control circuit (4) for controlling power supplied to the short-range wireless communications interface (2). The electronic device (1) further comprises a wave detector (5) adapted to detect long-range radio waves (10) emitted from the telecommunication device (6). The power control circuit (4) activates the short-range wireless communications interface (2), when the wave detector (5) detects radio waves (10) emitted by the long-range wireless communication interface (7) of the telecommunication device (6).

## Description

### Technical Field

The invention relates to an electronic device adapted for being wirelessly connected to a wireless telecommunication device, said telecommunication device comprising a long-range wireless communication interface and a short-range wireless communication interface, said electronic device comprising a short-range wireless communications interface for establishing a short-range link with the short-range wireless communication interface of the telecommunication device, a power source, a power control circuit for controlling power supplied to the short-range wireless communications interface. An example of an electronic device is a Bluetooth^{™} headset and an example of a telecommunication device is a Bluetooth^{™} enabled mobile telephone following the GSM standard.

### Background Art

Electronic devices powered by batteries are often provided with more or less automatic power switching measures and an important reason for this is to save energy. Especially communication devices with radio transmitting and receiving means are often provided with power saving circuits which - based on a timer - switches transmitting and receiving circuits to sleeping modes in order to save energy and thereby extend battery life. In the different sleep modes, some circuits, but not all are switched off.

The term "short-range wireless communication network" comprises WPAN's (wireless personal area networks) and WLAN's (wireless local area networks) while "long-range wireless communication network" refers to mobile telephone networks and wireless WAN's (wireless wide area networks). Examples of short-range wireless communication standards are Bluetooth^{™} and IEEE 802.11g (a WLAN standard). Examples of long-range wireless communication standards are the mobile telephony standards GSM and CdmaOne. A telecommunication device connected to a wireless network according to these standards uses a high transmitting power during establishment of a call.

WO 01/63888 discloses a wireless headset with automatic power control, where a sensor detects user interaction, such as picking up the headset or placing it upon the user's body, whereby the headset automatically transitions from an inactive state to an active state.

US 6,151,663 discloses a so-called repeater comprising a wave detector, and which is powered on when radio waves transmitted from a mobile telephone is detected by the wave detector.

US 2005/0288067 discloses an incoming call alert adapter for mobile devices comprising an RF receiver which activates a switching relay when radio waves emitted from a mobile telephone are detected.

### Disclosure of Invention

The object of the invention is to provide an automatic power control for an electronic device according to the preamble. The electronic device according to the invention is characterized in that the electronic device further comprises a wave detector connected to the power control circuit, which wave detector is adapted to detect radio waves emitted from the telecommunication device, when this is placed in proximity of the electronic device, such that the power control circuit activates the short-range wireless communications interface, when the wave detector detects radio waves emitted by the long-range wireless communication interface of the telecommunication device. Thus, the user can keep the electronic device in a power saving mode without worrying about activating it when it is needed in connection with a telecommunication call. According to an embodiment, the electronic device is adapted to enter an active mode by searching for paired devices and establishing a short-range link with such, when the short-range wireless communication interface is activated.

Preferably, the electronic device is adapted to stay in the active mode, as long as a signal indicating an active, incoming or outgoing call is received via the short-range link. The term "active call" includes a call, which is placed on hold.

According to a specific embodiment, the electronic device is adapted to enter a sleep mode, where the short-range link is maintained, when no signal indicating an active, incoming or outgoing call is received via the short-range link. In this case there is no need for the user to wait for reconnecting, when a call is established immediately after a previous call.

Acording to another embodiment, the electronic device is adapted to enter an inactive mode, where the short-range link is closed, when no active, incoming or outgoing call signal is present.

According to an embodiment, the wave detector is adapted to detect radio waves according to the GSM standard or a 3G standard.

The short-range wireless communication interface of the electronic device may be adapted to communicate in a PAN network, preferably according to the Bluetooth^{™} standard.

According to a specific embodiment, the electronic device is a headset.

Alternatively, the electronic device is a speaker phone, computer, printer, GPS, wrist watch, PDA, camera, car warning system.

Preferably, the wave detector is a passive wave detector, which comprises an antenna and a rectifying circuit rectifying the radio waves detected by the antenna into a direct current signal which is used as a control signal for activating the short-range wireless communications interface. With such a wave detector, the headset can automatically power up from a state, where the power consumption is zero, as the wave detector does not consume power.

The invention also relates to a communication system comprising an electronic device as described above and a telecommunication device comprising a long-range wireless communication interface and a short-range wireless communication interface.

### Brief Description of the Drawings

The invention is explained in detail below with reference to the drawing illustrating preferred embodiments of the invention and in which
- Fig. 1: is a diagram disclosing wireless connections between a mobile base station, a mobile phone and a wireless headset,
- Fig. 2: is diagram disclosing the most relevant elements of the headset according to the invention and a Bluetooth^{™} enabled mobile phone,
- Fig. 3: is a diagram disclosing two different modes of a headset according to a first embodiment of the invention,
- Fig. 4: is a diagram disclosing three different modes of a headset according to a second embodiment of the invention,
- Fig. 5: is a diagram disclosing the elements of the wave detector which is comprised by the headset according to the invention, and

- Fig. 6: is a schematic curve disclosing the transmitting power of mobile phone's GSM antenna when there is no active call, during establishment of a call, and during a call.

### Modes for Carrying out the Invention

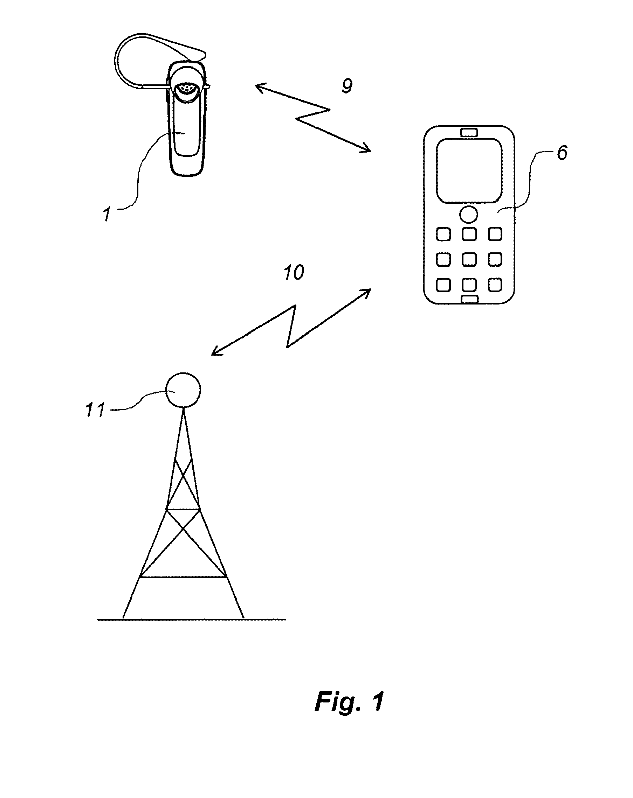

Figure 1 is a diagram disclosing how a Bluetooth^{™} headset 1 according to the invention is wirelessly connected to a Bluetooth^{™} enabled mobile phone 6 by a Bluetooth^{™} link 9. The Bluetooth^{™} link 9 is established by a preceding pairing process, where the two devices 1,6 are paired. Once a pairing has been established, it is remembered by the devices, which can then connect to each without user intervention. When desired, the pairing relationship can later be removed by the user. The mobile phone 6 is connected to a mobile base station 11 via a long-range link 10. The headset 1 makes it possible for the user to make hands free calls via the mobile phone 6.

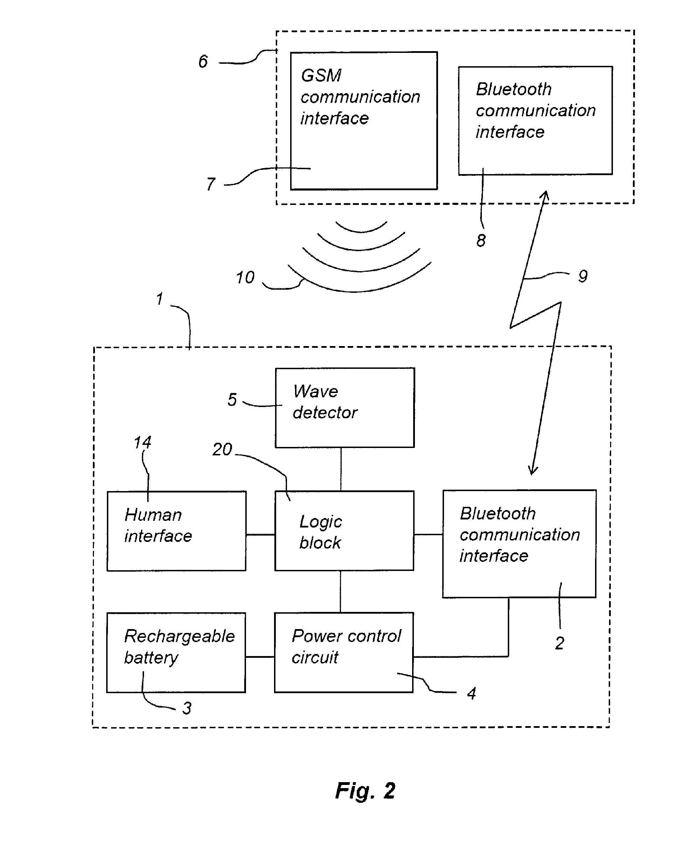

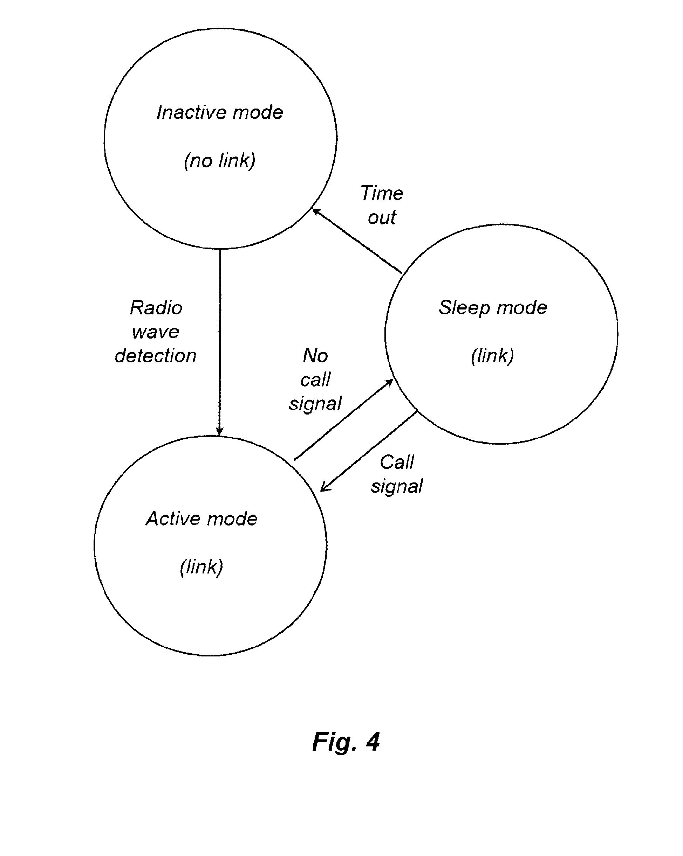

Figure 2 discloses the - for this invention - most relevant parts of the headset 1 according to the invention and a Bluetooth^{™} enabled mobile phone 6. Standard elements such as microphone, speaker, display etc. are left out for clarity reasons and because they are not relevant for the invention and also because a skilled person knows how to implement them. As shown, the headset 1 comprises a Bluetooth^{™} communication interface 2, a rechargeable battery 3, a power control circuit 4, a wave detector 5, a human interface 14 and a logic block 20. Thu human interface 14 is for example push buttons, touch buttons, sliding buttons, turnable buttons, a switching movable microphone arm or ear hook. The logic block 20 receives input signals from the human interface and sends control signals to the power control circuit 4. The power control circuit 4 is connected to the rechargeable battery 3 and controls power input to the Bluetooth^{™} communication interface. The wave detector 5, which will be further explained in figure 4, is also connected to the logic block 20. The mobile phone 6 is a standard mobile phone for GSM networks and comprises a GSM interface 7 and a Bluetooth^{™} interface 8. Thus, the Bluetooth^{™} interfaces 2, 8 of the headset 1 and the mobile phone 6 can be wirelessly connected by a link 9 and provide hands free communication for the user. The GSM interface 7 is in normal use wirelessly connected to mobile base stations and transmits GSM radio waves 10 at different power levels depending on the circumstances, which will be explained later. During the establishment of a call the GSM transmitter 7 sends radio wave bursts 10 with maximum power which are detected by the wave detector 5 if the phone is within short distance. This distance can vary, but is typically up to about 1 meter. When the GSM waves 10 are detected, the wave detector 5 sends a control signal to the logic block 20, which instructs the power control circuit 4 to power up the Bluetooth^{™} interface 2. When the Bluetooth^{™} interface 2 of the headset 1 is powered up it establishes a link 9 with the Bluetooth^{™} interface 8 of the mobile phone 6. This link 9 includes exchange of different control signals between the headset 1 and the mobile phone 6, inclusive a signal indicating an active, incoming or outgoing call. These control signals are received by the Bluetooth^{™} interface 2 of the headset 1 and is transmitted to the logic block 20. As long as the logic block 20 is receiving these signals, it instructs the power control circuit 4 to power the Bluetooth^{™} interface 2, whereby the Bluetooth^{™} link 9 is maintained. Thus, the Bluetooth^{™} link 9 is maintained whether the wave detector is still detecting GSM waves or not. This is particularly an advantage, as the GSM transmitting power of the mobile phone 6 is reduced, when the call is established and the wave detector 5 may not longer detect the GSM waves transmitted by the mobile phone.

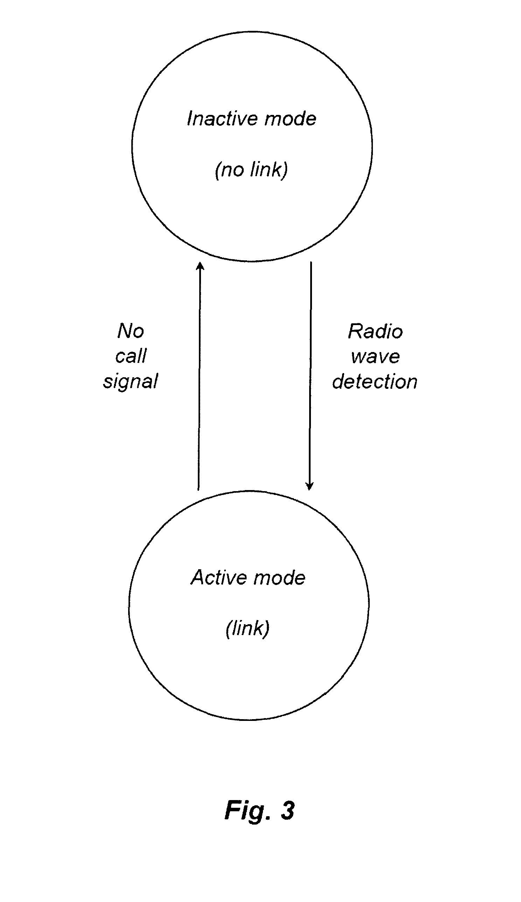

Figure 3 is a diagram disclosing two different modes of a headset 1 according to a first embodiment of the invention. In the first, inactive mode, the Bluetooth^{™} interface 2 of the headset 1 is powered down without transmitting or receiving, and there is no link between the headset 1 and the mobile phone 6. If the wave detector 5 of the headset 1 detects GSM waves transmitted by the mobile phone 6 during establishment of a call, the Bluetooth^{™} interface 2 of the headset 1 is activated and the Bluetooth^{™} link 9 between the headset 1 and the mobile phone 6 is established whereby the headset enters an active mode. When the Bluetooth^{™} link 9 is established, the headset 1 continuously receives signals indicating whether the mobile phone 6 is having an active call, an incoming call or an outgoing call. These signals are called "call signal" with a common term here. As shown in figure 3, the headset 1 returns from the active mode to the inactive mode, when there is no call signals. Thus, if the user ends a call, the headset returns automatically to the power saving, inactive mode. If the user for example is at a meeting or in a public transport means and the headset's wave detector detects GSM waves transmitted from another person's mobile phone, the headset enters the active mode, but returns soon again to the inactive mode, as there is no call signal received.

Figure 4 is a diagram disclosing three different modes of a headset according to a second embodiment of the invention. This embodiment has an inactive mode and an active mode as explained in connection with the first embodiment shown in figure 3. However, the second embodiment also has an intermediate sleep mode. As before, when the headset 1 is in the inactive mode and detects GSM waves, it powers up, establishes a link with the mobile phone and enters the active mode. When the headset is in the active mode and no longer receives a call signal, it enters the sleep mode, where it stays for a predetermined time before it returns to the power saving inactive mode unless it receives a call signal or wake-up signal from the mobile phone. This embodiment can be advantageous, as a user often has to make a call immediately after finishing a call, and in this case the headset does not need to power down, power up again and establishing a link, which takes time. In the sleep mode, the headset uses less power than in the active mode but more power as in the inactive mode.

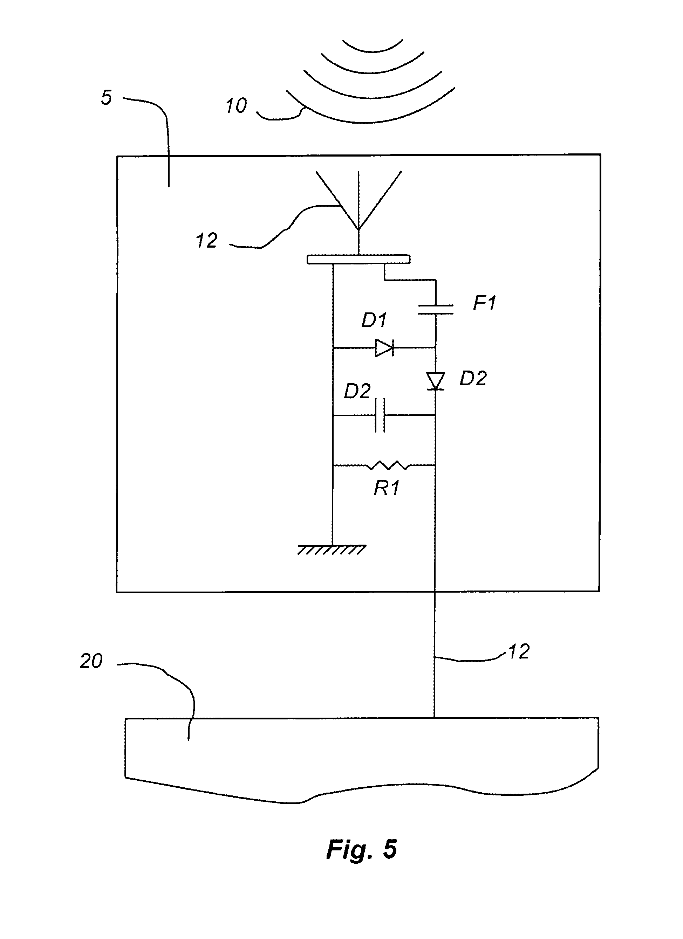

Figure 5 discloses the wave detector 5 in details. It comprises an antenna 12 which is tuned for GSM frequencies, which is primarily 900 MHZ and 1800 MHz. The wave detector 5 further comprises a rectifying circuit comprising two capacitors C1 and C2, two diodes D1 and D2 and a resistor R1. The rectifying circuit rectifies the antenna signal to a control signal which is sent via the control signal path 13 to the logic block 20. The wave detector 5 according to his embodiment is a passive element which uses no current. The control signal is enough to switch on the power for the Bluetooth^{™} interface and other circuits of the headset, whereby the headset in fact uses no power when in the inactive mode. However, the inactive mode can be such that a little power is needed to maintain certain functions active, but the Bluetooth^{™} interface, which is relatively power consuming is powered down in the inactive mode.

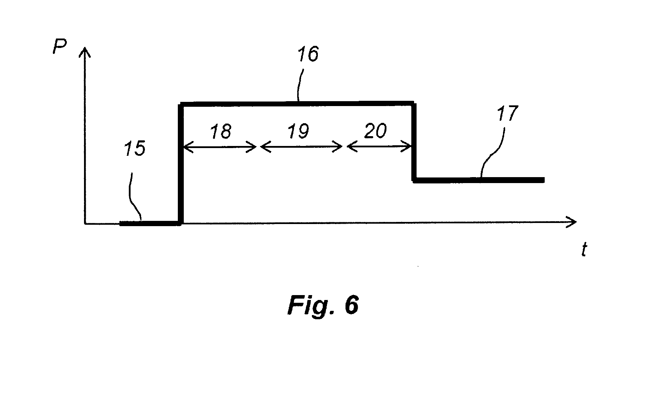

Figure 6 discloses the typical relative transmitting power of the GSM interface of a mobile phone before, during and after establishment of a call. When there is no call, the mobile is in a kind of standby mode and is only transmitting now and then on the so-called broadcast channel, e.g. when cell information is updated. The first part 15 of the power curve indicates GSM transmitting power before a call is initiated. The second part 16 of the power curve represents the establishment of a call, where the mobile phone transmits with full power. This second part 16 can be divided into three different periods, namely a pre-ringing handshaking period 18, a ringing period 19 and an answering period 20. The lengths of these periods vary, but could be for example 3, 2 and 1 seconds respectively. The third part 17 of the power curve represents the conversation, where power is reduced to a minimum required for a reliable communication.

The embodiments shown above are only examples of the invention.

Thus, the electronic device is not necessarily a headset. It could also be a speakerphone, which could be used in offices, meeting rooms or in a car. Also a desktop or a laptop computer or even a printer with a short-range wireless communication interface could be contemplated. Also, GPS-devices, wrist watches, cameras and other devices with short-range wireless communication interfaces could be provided with a wave detector for activating the wireless interface.

Bluetooth^{™} is used in the embodiments disclosed above, but other short-range wireless communication technologies or standards such as WLAN (wireless local area network) are covered by the invention.

The telecommunication device is not necessarily a GSM phone or even a traditional mobile phone. It could also be a PDA (personal digital assistant) or a smart phone and other devices with a long-range wireless communication interface following GSM or other long-range wireless communication standards, such as those covered by 3G or 4G.

### Reference signs

- 1: headset
- 2: short-range wireless communications interface of headset
- 3: rechargeable battery
- 4: power control circuit
- 5: wave detector
- 6: mobile phone
- 7: long-range wireless communication interface of mobile telephone
- 8: short-range wireless communication interface of mobile telephone
- 9: short-range link
- 10: radio waves emitted by longrange wireless communication interface of mobile telephone

- 11: mobile base station
- 12: antenna of wave detector
- 13: path for control signal from wave detector
- 14: human interface of headset
- 15: stand-by GSM-transmitting power of mobile phone
- 16: GSM transmitting power of mobile phone during establishment of a call
- 17: GSM transmitting power of mobile phone during an active call
- 18: pre-ringing handshaking period
- 19: ringing period
- 20: answering period

## Claims

1. An electronic device (1) adapted for being wirelessly connected to a wireless telecommunication device (6), said telecommunication device (6) comprising a long-range wireless communication interface (7) and a short-range wireless communication interface (8), said electronic device (1) comprising
- a short-range wireless communications interface (2) for establishing a short-range link (9) with the short-range wireless communication interface (8) of the telecommunication device (6),
- a power source (3),
- a power control circuit (4) for controlling power supplied to the short-range
wireless communications interface (2),
**characterised in that** the electronic device (1) further comprises
- a wave detector (5) connected to the power control circuit (4), which wave detector (5) is adapted to detect radio waves (10) emitted from the telecommunication device (6), when this is placed in the vicinity of the electronic device (1), such that the power control circuit (4) activates the short-range wireless communications interface (2), when the wave detector (5) detects radio waves (10) emitted by the long-range wireless communication interface (7) of the telecommunication device (6).

2. An electronic device (1) according to claim 1, wherein the electronic device (1) is adapted to enter an active mode by searching for paired devices (6) and establishing a short-range link (9) with such, when the short-range wireless communication interface (2) is activated.

3. An electronic device (1) according to claim 2, wherein the electronic device (1) is adapted to stay in the active mode, as long as a signal indicating an active, incoming or outgoing call is received via the short-range link (9).

4. An electronic device (1) according to claim 3, wherein the electronic device (1) is adapted to enter a sleep mode, where the short-range link (9) is maintained, when no signal indicating an active, incoming or outgoing call is received via the short-range link (9).

5. An electronic device (1) according to claim 3 or 4, wherein the electronic device (1) is adapted to enter an inactive mode, where the short-range link (9) is closed, when no call signal is present.

6. An electronic device (1) according to any of the preceding claims, wherein the wave detector (5) is adapted to detect radio waves according to the GSM standard or a 3G standard.

7. An electronic device (1) according to any of the preceding claims, wherein the short-range wireless communication interface (2) is adapted to communicate in a PAN network, preferably according to the Bluetooth^{™} standard.

8. An electronic device (1) according to any of the preceding claims, wherein the electronic device is a headset (1).

9. An electronic device (1) according to any of the preceding claims, wherein the electronic device is a speaker phone, computer, printer, GPS, wrist watch, PDA, camera, car warning system.

10. An electronic device (1) according to any of the preceding claims, wherein the wave detector (5) is a passive wave detector, which comprises an antenna (12) and a rectifying circuit rectifying the radio waves detected by the antenna (12) into a direct current signal which is used as a control signal for activating the short-range wireless communications interface (2).

11. A communication system comprising an electronic device (1) according to any of the preceding claims and a telecommunication device (6) comprising a long-range wireless communication interface (7) and a short-range wireless communication interface (8).
